# EUROPEAN PATENT SPECIFICATION

(11) **EP 1 263 292 B1**
(45) Date of publication and mention of the grant of the patent: **26.11.2003**
(21) Application number: 01910031.2
(22) Date of filing: 12.03.2001
(51) Int. Cl.: A22B 5/00, A22B 5/20

(54) **MEAT CARCASS CUTTING APPARATUS**
VORRICHTUNG ZUM ZERSCHNEIDEN VON SCHLACHTTIERKÖRPERN
APPAREIL DE DECOUPAGE DE CARCASSES DE VIANDE

(30) Priority: 16.03.2000 GB 0006236
(43) Date of publication of application: 11.12.2002
(73) Proprietor: Khodabandehloo, Koorosh, Culmstock, Devon EX15 3LA (GB)
(72) Inventor: Khodabandehloo, Koorosh, Culmstock, Devon EX15 3LA (GB)
(74) Representative: Craske, Stephen Allan
(86) International application number: GB0101032
(87) International publication number: WO01067873

(56) References cited:
- WO-A-91/04670
- WO-A-96/02145
- US-A- 3 916 484
- US-A- 4 662 029
- US-A- 4 667 371

## Description

### TECHNICAL FIELD OF THE INVENTION

This invention relates to apparatus for cutting meat carcasses, e.g. sides of pork, see e.g. documents WO-A-9 104 670 and US-A-4 667 371.

### BACKGROUND

The process of manually removing meat from whole carcasses requires skill and judgement in the manipulation of both meat and tools to achieve satisfactory results. Shortages of skilled labour, and an increasing demand for meat processors to reduce prices whilst improving quality and safety, has resulted in an increasing trend towards automation.

It is known to process a digital image of a meat carcass by means of a computer to automatically determine the best positions at which to make machine cuts, e.g. using a bandsaw. However, such systems are only capable of making very generalised machine cuts without any degree of precision, and a large amount of manual work is still required to produce good quality cuts of meat.

The present invention seeks to provide a new and inventive form of carcass cutting apparatus which reduces the amount of skilled manual work required and improves the speed and quality of processing meat carcasses.

### SUMMARY OF THE INVENTION

The present invention proposes a carcass cutting apparatus according to claim 1.

The use of a computer-controlled robotic arm allows the cutter to assist in guiding the meat carcasses during movement without the need to stop and hold the carcasses during the cutting process. The speed of the cutting process is therefore significantly increased.

The arm will generally be arranged to move the cutter in three mutually orthogonal axes with provision for changing the orientation of the cutter relative to the carcass.

The cutter is preferably of the kind having a cutting edge which moves in a continuous path, e.g. a circular saw blade. In order to permit the blade to be correctly orientated for making the necessary cuts the blade may be mounted for rotation under control of the computer about a substantially diametrical axis.

The apparatus may include support means for providing support for the carcass during the cutting procedure. The support means may comprise a fixed wall or bars, or a moving belt, rollers or the like.

The carrier system preferably includes a series of suspension elements for suspending the carcasses therefrom.

The invention also provides a method of cutting prepared meat carcasses according to claim 7.

The prepared carcasses are preferably suspended with the head end down. The first cut is preferably made longitudinally of the carcass, i.e. a chop or loin cut, and preferably in an upward direction. This may be followed by one or more transverse cuts made generally in the direction of movement, e.g. a ham cut. Making the cuts in the order specified ensures the accuracy of the cuts.

### BRIEF DESCRIPTION OF THE DRAWINGS

The following description and the accompanying drawings referred to therein are included by way of non-limiting example in order to illustrate how the invention may be put into practice. In the drawings:
Figure 1 shows a prepared carcass with the position of various standard cuts marked thereon;
Figure 2 is a front view of meat carcass cutting apparatus in accordance with the invention; and
Figure 3 is a plan view of the apparatus.

### DETAILED DESCRIPTION OF THE DRAWINGS

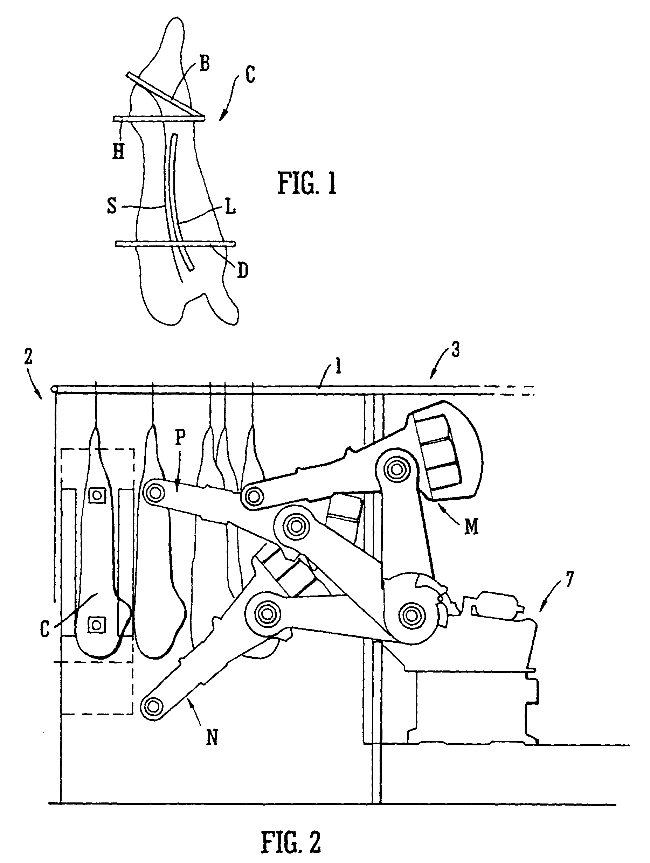

**Fig. 1** shows a half-side of pork *C* looking from the bone side. The position of the spinal column is indicated at *S*. The carcass is orientated as it would be when suspended from the tail end with the head end downmost. The various primal cuts are shown in the drawing as follows:
*L*: Chop or loin cut
*H*: Ham cut
*B*: H-bone cut
*D*: Shoulder cut

The apparatus to be described below can be used for hot, warm or cold processing of carcasses (i.e. post-slaughter, room temperature or chilled processing). The chop or loin cut is invariably made, but the number of transverse cuts (e.g. *H*, *B* and *D*) can vary.

Referring to **Fig.s 2 and 3,** the carcass cutting apparatus includes a track 1 for conveying the meat carcasses C from a loading end 2 to an unloading end 3. The track includes chains or similar means suitable for carrying the meat carcasses one after another, at a constant known speed, suspended from hooks in the head-end-down orientation shown in **Fig. 1**. The carcasses are loaded onto the track 1 with the skin side facing a guide and support wall 4 which extends along the rear of the track. The wall 4 maintains the orientation of the carcasses which are substantially aligned in their direction of movement along the track 1.

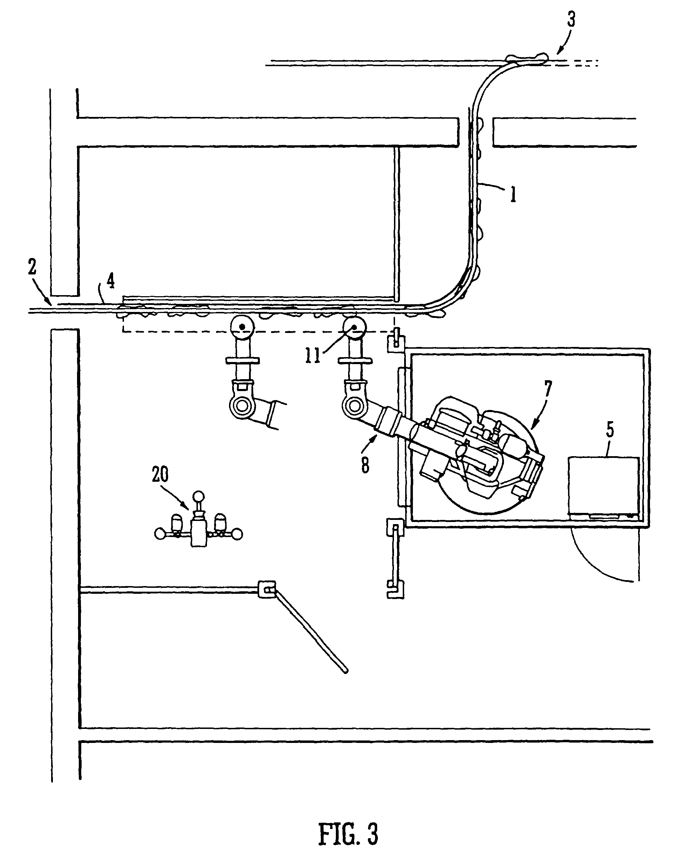

As shown in **Fig. 3**, the apparatus includes a cabinet 5 which contains a computer for data processing and control. There is also a motorised robot 7 having a robotic arm 8 which comprises two or more relatively moveable sections. The arm carries a rotatably driven circular saw blade 11 and is arranged to move the blade in three mutually orthogonal axes (i.e. cartesian *X*, *Y* and *Z* axes). Orientation of the blade is also possible by controlled rotation about a horizontal axis which extends diametrically of the blade. The robot 7 is a standard industrial unit which is completely encased within a liquid-impermeable jacket (not shown) except for the blade 11.

An optical system comprising a CCD camera 20 is arranged between the loading position 2 and the robot 7 to obtain a digital image of the carcass as viewed from the bone side which faces away from the wall 4. The computer analyses the digital image to determine the best positions in which to make the primal cuts according to the size and shape of the carcass. The robot is then directed to cut the carcasses as they move along the track 1 according to a cutting pattern determined by the computer. The direction and order of the cuts is important. The first cut to be made is the chop or loin cut *L* (**Fig. 1**) which can be made in an upward or downward direction. During cutting the blade 11 also moves with the carcass along the track 1 so that the blade helps to guide the carcass along the track, assisted by the fact that the carcass is also supported and guided by the wall 4.

The first cut *L* is followed by the ham cut *H*, which is made from right to left as viewed in **Fig. 1**. This can be followed by the H-bone and Shoulder cuts *B* and *D*, which are made in the same direction. The cuts are made very rapidly. The position of the cutter 11 at the start and end of the cutting process is illustrated at *N* and *M* in **Fig.s 2 and 3. Fig. 2** also illustrates the upper and lower limits of required range of movement, *N* and *P*.

The cut carcass is removed from the track at the unloading end 3. The final removal of the meat will usually be performed manually, although the apparatus can be programmed to perform complete through-cuts or partial through-cuts if desired. The precise control over the cutting depth and position which is possible using the visual analysis and robotic cutter allows the meat and soft tissues to be accurately cut whilst still held together by the bony skeleton. Alternatively, the computer can be programmed to cut through the skin and bone so that the carcass only remains held together by skin.

The total processing time from input of the carcass to output of the cut products may be significantly less than that required for total manual processing, depending on the number of cuts required. The apparatus thus has benefits for the processing plant in terms of increased productivity, more consistent quality, higher yield, better hygiene and improved working conditions.

## Claims

1. Carcass cutting apparatus which includes:
a cutter (11) which is carried and moved by a mechanical robotic arm (8) under the control of a computer (5) to make a plurality of mutually distinct primal cuts (L, B, H, D) in a carcass in response to information provided by an optical system (20), the robotic arm (8) being arranged to move the cutter in three mutually orthogonal x, y and z axes with provision for changing the orientation of the cutter relative to the carcass, and sensing means including the optical imaging system (20) which provides a digital image of the carcass from which the computer (5) calculates the optimum position in which to make the cuts according to the size and shape of the carcass;
***characterised in that***
- a carrier system (1) is provided for continuously moving prepared meat carcasses (C) from a loading position (2) past a cutting position to an unloading position (3) whereby the carcass is cut whilst in motion as it moves along the carrier system (1); and
- the optical system (20) is arranged between the loading position (2) and the robotic arm (8) to obtain a digital image of the carcass from which the size and position of the meat carcasses can be determined dynamically during movement along the carrier system.

2. Carcass cutting apparatus according to Claim 1, in which the cutter has a cutting edge which moves in a continuous path.

3. Carcass cutting apparatus according to Claim 2, in which the cutter is a circular saw blade.

4. Carcass cutting apparatus according to Claim 1, including support means (4) for providing support for the carcass during the cutting procedure.

5. Carcass cutting apparatus according to Claim 1, in which the carrier system includes a series of suspension elements for suspending the carcasses therefrom.

6. Carcass cutting apparatus according to Claim 1, in which the robotic arm is part of a robot which is encased within a liquid-impermeable jacket.

7. A method of cutting prepared meat carcasses which includes:
using a cutter (11) which is carried and moved by a mechanical robotic arm (8) under the control of a computer (5) to make a plurality of mutually distinct primal cuts (L, B, H, D) in a carcass in response to information provided by an optical system (20), the robotic arm (8) being arranged to move the cutter in three mutually orthogonal x, y and z axes with provision for changing the orientation of the cutter relative to the carcass, and using sensing means including the optical imaging system (20) which provides a digital image of the carcass from which the computer (5) calculates the optimum position in which to make the cuts according to the size and shape of the carcass;
***characterised in that***
- a carrier system (1) is provided to continuously move prepared meat carcasses (*C*) from a loading position (2) past a cutting position to an unloading position (3) whereby the carcass is cut whilst in motion as it moves along the carrier system (1); and
- the optical system (20) is arranged between the loading position (2) and the robotic arm (8) to obtain a digital image of the carcass from which the size and position of the meat carcasses is determined dynamically during movement along the carrier system.

8. A method of cutting prepared meat carcasses according to Claim 7, in which the prepared carcasses are suspended with the head end down.

9. A method of cutting prepared meat carcasses according to Claim 7, in which the first cut (*L*) is made longitudinally of the carcass.

## Patentansprüche

1. Vorrichtung zum zerschneiden von Schlachttierkörpern, mit:
einer Schneideeinrichtung (11), die von einem mechanischen Roboterarm (8) gehalten und unter Steuerung von einem Computer (5) bewegt wird, um in einem Schlachttierkörper eine Vielzahl von voneinander verschiedenen Hauptschnitten (L, B, H, D) in Reaktion auf Informationen durchzuführen, die von einem optischen System (20) zur Verfügung gestellt werden, wobei der Roboterarm (8) dazu ausgestaltet ist, um die Schneideeinrichtung in drei zueinander orthogonalen Achsen (x, y, z) zu bewegen und um die Ausrichtung der Schneideeinrichtung relativ zu dem schlachttierkörper zu verändern, und mit Erfassungseinrichtungen, die das optische Bildverarbeitungssystem (20) beinhalten, das ein digitales Bild des Schlachttierkörpers zur Verfügung stellt, aus dem der Computer (5) die optimale Position berechnet, in der die Schnitte gemäß der Größe und der Form des Schlachttierkörpers durchgeführt werden;
**dadurch gekennzeichnet, dass**
- ein Transportsystem (1) vorgesehen ist, um vorverarbeitete Schlachttierkörper (C) kontinuierlich von einer Beladeposition (2) vorbei an einer Schneideposition zu einer Entladeposition (3) zu bewegen, wobei der Schlachttierkörper zerschnitten wird, während er sich in Bewegung befindet, wenn er entlang des Transportsystems (1) bewegt wird; und
- das optische System (20) zwischen der Beladeposition (2) und dem Roboterarm (8) angeordnet ist, um ein digitales Bild von dem Schlachttierkörper bereitzustellen, aus dem die Größe und die Position der Schlachttierkörper während der Bewegung entlang des Transportsystems dynamisch bestimmt werden kann.

2. Vorrichtung zum Zerschneiden von Schlachttierkörpern nach Anspruch 1, bei der die schneideeinrichtung eine Schneidkante hat, die sich auf einem kontinuierlichen Pfad bewegt.

3. Vorrichtung zum Zerschneiden von Schlachttierkörpern nach Anspruch 2, bei der die Schneideeinrichtung ein Kreissägeblatt ist.

4. Vorrichtung zum Zerschneiden von Schlachttierkörpern nach Anspruch 1 mit einer Abstützeinrichtung (4), um während des Schneidvorgangs eine Abstützung für den Schlachttierkörper zur Verfügung zu stellen.

5. Vorrichtung zum zerschneiden von Schlachttierkörpern nach Anspruch 1, bei der das Transportsystem eine Reihe von Aufhängungselementen aufweist, um die Schlachttierkörper daran aufzuhängen.

6. Vorrichtung zum Zerschneiden von Schlachttierkörpern nach Anspruch 1, bei der der Roboterarm Teil eines Roboters ist, der von einer für Flüssigkeiten undurchlässigen Umhüllung umschlossen ist.

7. Verfahren zum Schneiden von vorverarbeiteten Schlachttierkörpern, mit:
Verwenden einer Schneideeinrichtung (11), die von einem mechanischen Roboterarm (8) gehalten und unter der Steuerung von einem Computer (5) bewegt wird, um in einem Schlachttierkörper eine Vielzahl von voneinander verschiedenen Hauptschnitten (L, B, H, D) in Reaktion auf Informationen durchzuführen, die von einem optischen System (20) zur Verfügung gestellt werden, wobei der Roboterarm (8) dazu ausgestaltet ist, um die Schneideeinrichtung in drei zueinander orthogonalen Achsen (x, y, z) zu bewegen und um die Ausrichtung der Schneideeinrichtung relativ zu dem Schlachttierkörper zu verändern, und Verwenden von Erfassungseinrichtungen, die das optische Bildverarbeitungssystem (20) beinhalten, das ein digitales Bild des Schlachttierkörpers zur Verfügung stellt, aus dem der Computer (5) die optimale Position berechnet, in der die Schnitte gemäß der Größe und der Form des Schlachttierkörpers durchgeführt werden,
**dadurch gekennzeichnet, dass**
- ein Transportsystem (1) vorgesehen ist, um vorverarbeitete Schlachttierkörper (c) kontinuierlich von einer Beladeposition (2) vorbei an einer Schneideposition zu einer Entladeposition (3) zu bewegen, wobei der Schlachttierkörper zerschnitten wird, während er sich in Bewegung befindet, wenn er entlang des Transportsystems (1) bewegt. wird; und
- das optische System (20) zwischen der Beladeposition (2) und dem Roboterarm (8) angeordnet ist, um ein digitales Bild von dem Schlachttierkörper bereitzustellen, aus dem die Größe und die Position der Schlachttierkörper während der Bewegung entlang des Transportsystems dynamisch bestimmt werden kann.

8. Verfahren zum Schneiden von vorverarbeiteten Schlachttierkörpern nach Anspruch 7, bei dem die vorverarbeiteten Schlachttierkörper mit dem Kopfende nach unten aufgehängt sind.

9. Verfahren zum Schneiden von vorverarbeiteten Schlachttierkörpern nach Anspruch 7, bei dem der erste Schnitt (L) in Längsrichtung des schlachttierkörpers erfolgt.

## Revendications

1. Appareil de découpage de carcasses de viande, qui comprend :
une découpeuse (11) qui est supportée et déplacée par un bras mécanique robotisé (8) commandé par un ordinateur (5) pour effectuer une pluralité de découpes principales mutuellement distinctes (L, B, H, D) dans une carcasse en réponse aux informations fournies par un système optique (20), le bras robotisé (8) étant aménagé pour déplacer la découpeuse selon trois axes mutuellement orthogonaux x, y et z en prévoyant un changement d'orientation de la découpeuse par rapport à la carcasse, et un moyen de détection comprenant le système d'imagerie optique (20) qui fournit une image numérique de la carcasse à partir de laquelle l'ordinateur (5) calcule la position optimale pour effectuer les découpes selon la taille et la forme de la carcasse;
**caractérisé en ce que** :
- un système de transport (1) est prévu pour déplacer en continu les carcasses de viande préparées (C) d'une position de chargement à une position de déchargement (3) en passant par une position de découpe, de sorte que la carcasse soit découpée en cours de déplacement au fur et à mesure qu'elle se déplace le long du système de transport (1); et
- le système optique (20) est disposé entre la position de chargement (2) et le bras robotisé (8) pour obtenir une image numérique de la carcasse à partir de laquelle la taille et la position des carcasses de viande peuvent être déterminées de façon dynamique au cours du déplacement le long du système de transport.

2. Appareil de découpage de carcasses de viande selon la revendication 1, dans lequel la découpeuse a une arête tranchante qui se déplace en trajet continu.

3. Appareil de découpage de carcasses de viande selon la revendication 2, dans lequel la découpeuse est une lame de scie circulaire.

4. Appareil de découpage de carcasses de viande selon la revendication 1, comprenant un moyen de support (4) pour assurer un support à la carcasse pendant la procédure de découpe.

5. Appareil de découpage de carcasses de viande selon la revendication 1, dans lequel le système de transport comprend une série d'éléments de suspension pour y suspendre les carcasses.

6. Appareil de découpage de carcasses de viande selon la revendication 1, dans lequel le bras robotisé fait partie d'un robot qui est enserré dans une chemise imperméable aux liquides.

7. Procédé pour découper des carcasses de viande préparées, qui comprend :
l'utilisation d'une découpeuse (11) qui est supportée et déplacée par un bras mécanique robotisé (8) commandé par un ordinateur (5) pour effectuer une pluralité de découpes principales mutuellement distinctes (L, B, H, D) dans une carcasse en réponse aux informations fournies par un système optique (20), le bras robotisé (8) étant aménagé pour déplacer la découpeuse selon trois axes mutuellement orthogonaux x, y et z en prévoyant le changement d'orientation de la découpeuse par rapport à la carcasse, et l'utilisation d'un moyen de détection comprenant le système d'imagerie optique (20) qui fournit une image numérique de la carcasse à partir de laquelle l'ordinateur (5) calcule la position optimale pour effectuer les découpes selon la taille et la forme de la carcasse;
**caractérisé en ce que** :
- un système de transport (1) est prévu pour déplacer en continu les carcasses de viande préparées (C) d'une position de chargement (2) à une position de déchargement (3) en passant par une position de découpe, de sorte que la carcasse soit découpée en cours de déplacement au fur et à mesure qu'elle se déplace le long du système de transport (1);
- le système optique (20) est disposé entre la position de chargement (2) et le bras robotisé (8) pour obtenir une image numérique de la carcasse à partir de laquelle la taille et la position des carcasses de viande sont déterminées de façon dynamique au cours du déplacement le long du système de transport.

8. Procédé pour découper des carcasses de viande préparées selon la revendication 7, dans lequel les carcasses préparées sont suspendues avec l'extrémité tête vers le bas.

9. Procédé pour découper des carcasses de viande préparées selon la revendication 7, dans lequel la première découpe (L) est faite dans le sens longitudinal de la carcasse.
